# EUROPEAN PATENT SPECIFICATION

(11) **EP 3 862 598 B1**
(45) Date of publication and mention of the grant of the patent: **24.05.2023**
(21) Application number: 20315014.9
(22) Date of filing: 07.02.2020
(51) Int. Cl.: F16J 15/16, F16J 15/38, F16J 15/44, F16J 15/447, F16J 15/00, F16J 15/3236

(54) **SHAFT-SEALING ARRANGEMENT**
WELLENDICHTUNGSANORDNUNG
DISPOSITIF D'ÉTANCHÉITÉ D'ARBRE

(43) Date of publication of application: 11.08.2021
(73) Proprietor: Dresser-Rand SAS, 76600 Le Havre (FR)
(72) Inventor: Lebigre, Olivier, 76133 Rolleville (FR)
(74) Representative: Eidelsberg, Olivier Nathan

(56) References cited:
- EP-A1- 2 497 977
- DE-A1- 2 322 458
- DE-U- 7 141 842
- US-A- 5 078 410
- US-A1- 2014 030 063

## Description

The invention relates to a shaft-sealing arrangement comprising a shaft, which is mounted in a rotatable manner and extends along an axial axis, a stator, which is arranged around the shaft, and a rotating sealing ring, which is connected to the shaft, wherein a first gap is formed between the stator and the shaft, wherein the stator has a first sealing surface, which is arranged downstream of the first gap, as seen in a radial direction, wherein the sealing ring has a second sealing surface, which is arranged in a position opposite the first sealing surface, wherein a second gap is formed between the first sealing surface and the second sealing surface.

Shaft seals are required, in particular, in turbomachines, for example in gas turbines, steam turbines or compressors. All of these turbomachines have in common that a flow medium which is present in the turbomachine has to be prevented from escaping from the turbomachine. The turbomachines has a rotatably mounted shaft, which is usually enclosed by a stator, for example a turbine housing. The rotatable shaft and the stator usually have between them a gap through which the flow medium can flow, it being necessary for this to be prevented or at least minimized.

Use is therefore made of different types of shaft-sealing arrangement in order to prevent flow medium from flowing out. Labyrinth seals, brush seals or mechanical seals are known in this context. Other types of shaft-sealing arrangement are also known. A comprehensive listing of the various shaft-sealing arrangements has not been included here.

In relation to the labyrinth seals, which are of comparatively straightforward construction, the modern dry gas seals are comparatively challenging as far as the operating conditions are concerned. Reliable operation of dry gas seals is possible only when a sliding film of dry gas between the two sealing rings is constantly supplied with gas which has been treated to a high quality. The gas for supplying the gas film between the sealing rings, on the one hand, has to have been dried to a sufficient extent and, on the other hand, also has to be comparatively free of foreign bodies. The amount of space, and the investment costs, required by the auxiliary systems, for example of a process-gas compressor, which are necessary for the gas treatment must be taken into account. A prior art dry gas seal having a gas infeed and used in combination with a labyrinth seal is known from e.g. US 2014/0030063 A1.

There are known operating conditions in which the sealing action of a shaft-sealing arrangement has to meet different requirements. It can thus be the case that, in the standstill state, i.e. when the shaft is not rotating, the sealing action required for the shaft seal is different to that required during operation, i.e. when the shaft is rotating, it being possible for this rotation to take place, for example, at nominal speed. There are operating conditions which require the best possible sealing action in the standstill state and require the sealing action to decrease during operation, i.e., for this operating condition, a flow of a medium between the rotating shaft and the stator is very much desirable.

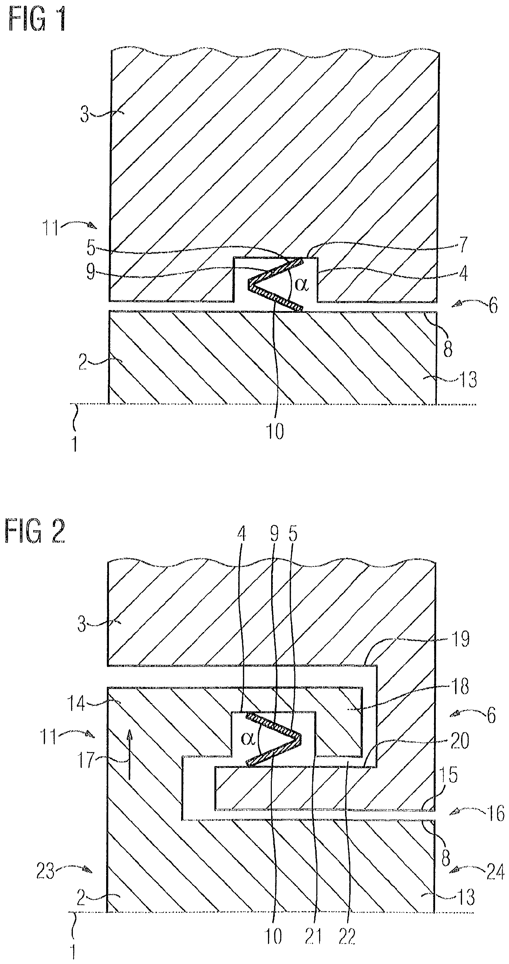

For example lip seals, as illustrated in figure 1, are known.

Figure 1 therefore illustrates a known lip seal according to the prior art. A sealing unit used in a turbo compressor and that seals at standstill while opening during rotation of the shaft is known from e.g. DE7141842U.

A shaft 2 here, which is mounted in a rotatable manner about an axis of rotation 1, is arranged in a position opposite a stator 3. A lip seal 5 is arranged in a recess 4 in the stator. The lip seal 5 forms a V shape, as seen in cross section. The lip seal 5 here is formed around the entire circumference 6. The lip seal 5 is formed here such that there is slight contact with an inner surface 7 of the recess 4. Contact likewise takes place between the lip seal 5 and a surface 8 of the shaft 2. The lip seal 5 here has an upper limb 9 and a lower limb 10. The upper limb 9 is in contact with the surface 7 of the recess 4 of the stator. The lower limb 10 is in contact with the surface 8 of the shaft 2. At high rotational speeds, this contact results in a temperature increase and wear. The lip seals are therefore formed rather more for lower rotational speeds. For higher speeds, use is made rather more of contactless seals, e.g. labyrinth seals. However, these types of seal are less effective at lower rotational speeds.

It has been the object of the invention to create a shaft-sealing arrangement which in the standstill state, i.e. in a state with little, if any, rotation of the shaft, exhibits a good sealing action and in the operational state, at for example nominal speed, exhibits a lesser sealing action in relation to the standstill state.

This object is achieved by a shaft-sealing arrangement in accordance with the features of claim 1. The arrangement comprises a shaft, which is mounted in a rotatable manner and extends along an axial axis, a stator, which is arranged around the shaft, and a rotating sealing ring, which is connected to the shaft, wherein a first gap is formed between the stator and the shaft, wherein the stator has a first sealing surface, which is arranged downstream of the first gap, as seen in a radial direction, wherein the sealing ring has a second sealing surface, which is arranged in a position opposite the first sealing surface, wherein a gap is formed between the first sealing surface and the second sealing surface and a sealing unit is arranged in the second gap, in the sealing ring, on the second sealing surface.

The invention proceeds from the idea the second sealing unit exhibits a good sealing action during standstill. It is possible here for a good sealing action during operation to be realized even by a narrow gap. This means that the first sealing unit can be designed in the form of a first gap which is as narrow as possible.

This provides for a sealing action for a comparatively large number of operational states.

Advantageous developments are specified in the dependent claims.

Provision is thus made, in a first advantageous development, for the second sealing unit to be designed such that it seals the second gap when the shaft is not rotating and allows flow through the second gap when the shaft is rotating.

The second sealing unit is therefore designed optimally for the standstill state, i.e., in the standstill state, the second sealing unit predominantly performs the sealing action between the shaft and the stator. At higher rotational speeds, the first sealing unit predominantly performs the sealing action.

In a further advantageous development, the second sealing unit is designed in the form of a lip seal. The lip seal here, as illustrated in figure 1, has a first limb and a second limb, which form a V shape, as seen in cross section. The lip seal is designed here such that, in the standstill state, an angle α is formed between the first limb and second limb. This angle α is reduced under the action of centrifugal force, which prevails when the shaft is rotating. In other words, the V shape becomes more acutely angled under the action of centrifugal force.

In a further advantageous development, the stator has a recess, which is formed in a circumferential direction, wherein the first sealing surface is part of the recess and is arranged in a position opposite the first gap.

The sealing ring advantageously has a protrusion, which projects into the recess such that the second sealing surface is arranged in a position opposite the first sealing surface.

The invention therefore makes provision for the rotating part of the shaft-sealing arrangement which comprises the protrusion to project into the recess of the stator. The lip seal is arranged within the protrusion. The lip seal within the protrusion therefore experiences a change in geometry on account of the centrifugal force. The first sealing surface, which is formed in the stator, is arranged within the recess. In relation to the axis of rotation, the first sealing surface is located downstream of the first gap, as seen in the radial direction.

In a further advantageous development, the first sealing surface is formed essentially parallel to the axial axis.

In a further advantageous development, the first sealing unit, in the first gap, is designed in the form of a labyrinth seal.

In accordance with the invention, a dry gas seal, which comprises a slide ring, is formed alongside the sealing ring. The mechanical seal comprises a sealing body, which butts against the sealing ring, adjacent thereto. The slide ring is arranged adjacent to the sealing body. A gas flows, via a gas infeed, between the sealing body and the slide ring. This gas has to be particularly dry and clean and is fed via a specific gas infeed. The sealing action of the mechanical seal is good particularly in the operational state, in which the shaft is rotating. This means that a relative speed prevails between the sealing body and the slide ring. In contrast, in the standstill state, the sealing action of the mechanical seal is not optimum, and therefore the second sealing unit predominantly performs the sealing action.

The gas infeed is designed such that a gas can be fed between the stator and the sealing ring.

The properties, features and advantages of the invention described above, and the manner in which they are achieved, will be more clearly and distinctly comprehensible in conjunction with the following description of the exemplary embodiments, which will be explained in more detail in conjunction with the drawings. Like components, or components with like functions, are indicated here by like reference signs.

Exemplary embodiments of the invention will be described hereinbelow with reference the drawing. These are not intended to illustrate the exemplary embodiments to scale; rather, the drawing, also useful for explanatory purposes, is in schematic and/or slightly distorted form. In order to supplement the teachings which are directly evident in the drawing, reference is made to the relevant prior art.

In the drawings:
- figure 1: shows a sealing arrangement according to the prior art,
- figure 2: shows a sealing arrangement according to the invention,
- figure 3: shows a sealing arrangement according to the invention, alongside a mechanical seal, at a standstill, and
- figure 4: shows a sealing arrangement according to the invention from figure 3 during operation (when the shaft is rotating).

Figure 2 shows a shaft-sealing arrangement 11 but does not show a dry gas seal, nor a gas infeed.

The difference between the shaft-sealing arrangement 11 and the shaft-sealing arrangement according to figure 1 is that the shaft has a rotating sealing ring 13 which is of extended design in comparison with the sealing ring 13 according to figure 1, the second sealing ring 14 being arranged in the extension.

The sealing ring 13 comprises a surface 8, which is arranged opposite a surface 15 of the stator 3. A first gap 16 is formed between the surface 15 and the surface 8. A first sealing unit is arranged in this first gap 16. The first sealing unit can be optimized spacing in the first gap 16. In an alternative embodiment, the first sealing unit can be a labyrinth seal.

The sealing ring 13 is designed to be extended in a radial direction 17 (as seen in relation to the axis of rotation 1). The extension of the sealing ring 13 has a protrusion 18, which projects into a recess 19 in the stator 3. This gives rise to a first sealing surface 20 on the stator 3, said sealing surface being arranged downstream of the first gap 16. A second sealing surface 21 is arranged on the protrusion 18 of the sealing ring 13, in a position opposite the first sealing surface 20. The first sealing surface 20 is formed essentially parallel to the axis of rotation 1. As a result, the second sealing surface 21 is also formed essentially parallel to the axis of rotation 1.

The second sealing surface 21 has a recess 4, in which the second sealing unit 14 is arranged. A second gap 22 is formed between the first sealing surface 20 and the second sealing surface 21.

This shaft-sealing arrangement 11 separates an exterior space 23 from an interior space 24 in terms of flow. The first sealing unit here, in the first gap 16, performs the sealing task during operation, while the shaft 2 is rotating, and the second sealing unit 14, in the second gap 22, performs the sealing action during standstill (when the shaft is not rotating).

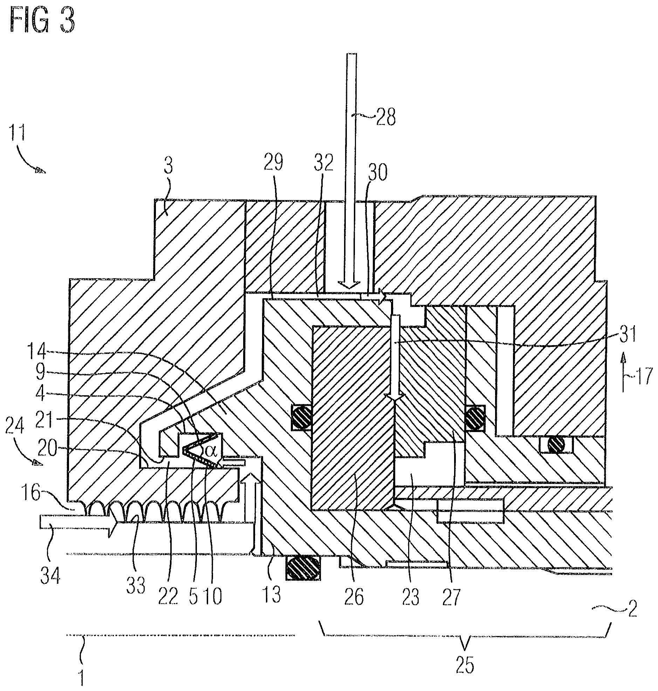

Figure 3 shows an embodiment of the shaft-sealing arrangement 11 according to the invention in conjunction with a mechanical seal 25. The mechanical seal 25 essentially comprises a sealing body 26, which is arranged adjacent to a slide ring 27. The sealing body 26 is connected to the sealing ring 13, and therefore the sealing body 26 can be rotated. The slide ring 27, in contrast, is connected to the stator 3 at a fixed location, and therefore, when the shaft 2 is rotating, this gives rise to relative movement between the sealing body 26 and the slide ring 27. A gas infeed 28 is formed in the stator 3, said gas infeed feeding a gas to the shaft-sealing arrangement 11. The gas here flows first of all onto an upper part 29 of the slide ring 27. From there, the gas stream splits into a first branch 30, which leads to the mechanical seal 25 and flows there between the sealing body 26 and the slide ring 27. In figure 3, the arrow 31 symbolizes the movement of the gas between the sealing body 26 and the slide ring 27. The gas then flows pretty much into an exterior space 23.

Small flow in a second branch 32 takes place, counter to that of the first branch 30, in the direction of the second sealing unit 14. The second sealing unit 14 is designed in a manner identical to the second sealing unit 14 according to figure 2. For reasons of clarity, some reference signs have been omitted.

Figure 3 shows the standstill state. This means that the shaft 2 is not rotating. The second sealing unit 14 therefore predominantly performs the sealing action (is sealing hermetically). This means that the lip seal 5 is in abutting contact with the first sealing surface 20 and thus gives rise to an optimum sealing action. A gas contaminated by way of an interior space 24 can flow, in part, through the first gap 16, in which a labyrinth seal 33 is arranged. This is symbolized by the arrow 34. However, the contaminated stream (arrow 34) can pass, via further gaps, only as far as the lip seal 5, and cannot reach the mechanical seal 25, which could result in the mechanical seal 25 being damaged. According to the prior art, a permanent inflow would be fed here to the gas infeed 28, which would counteract the contaminated stream 34. The present invention can essentially dispense with this constant inflow. This results in further cost-cutting measures.

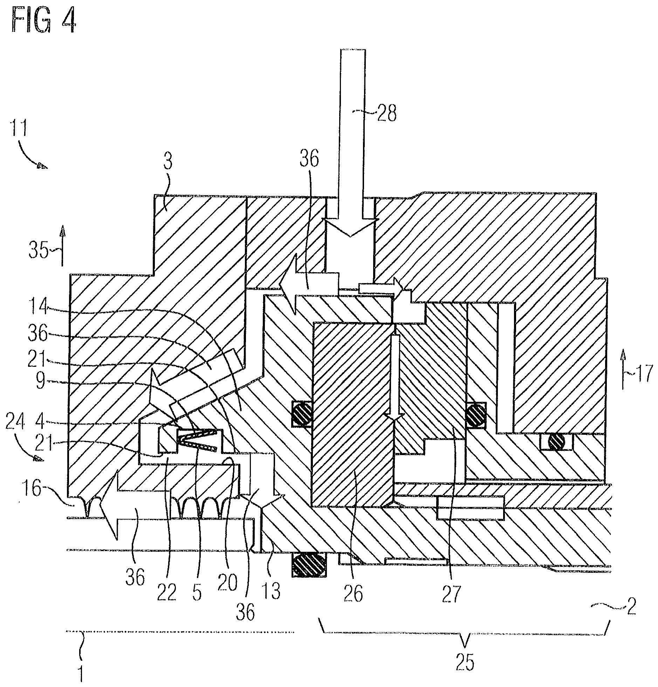

That embodiment of the shaft-sealing arrangement 11 which is shown in figure 4 has identical design features to the shaft-sealing arrangement 11 according to figure 3. The difference between figure 4 and figure 3 is that figure 4 shows the state during operation, that is to say when the shaft is rotating. As can be seen in figure 4, the lip seal 5 becomes more acutely angled on account of the centrifugal force, which is oriented in the radial direction 17. This means that the angle α between the first limb 9 and the second limb 10 become smaller. However, this also means that, during rotation, the gap between the first sealing surface 20 and the second sealing surface 21 becomes larger. When the shaft 2 is rotating, the mechanical seal 25 performs the main sealing action. The gas infeed 28 here is such that a predominant part of the gas fed flows into the gap between the first sealing surface 20 and the second sealing surface 21 and, as illustrated in fig-ure 4, flows toward the interior space 24. As symbolized by the arrows 36, this effectively prevents contamination of a gas in the interior space 24 in the direction of the shaft-sealing arrangement 11, because the narrow gap 16 in the inner labyrinth generate a high velocity of the gas which ensure buffer action.

Wear to the lip seal 5 is effectively prevented on account of the centrifugal force.

Dry gas seals are comparatively susceptible to contamination from the interior space 24. The gas which is fed to the gas infeed 28 is usually process gas from the interior space 24, said process gas being reprocessed, filtered, etc., in elaborate installations and being fed to the mechanical seal 25. In the standstill state, the stream flowing out of the gas infeed 28 would not be sufficient to establish a counterpressure in relation to the contaminated gas from the interior space 24. The lip seal 5 according to the invention is therefore very effective, since it counteracts contamination from the interior space 24.

Without the lip seal 5 according to the invention, it would still be necessary to have a so-called gas booster which, in the standstill state, has to maintain a comparatively high inflow of gas via the gas infeed in order to exhibit a counterpressure in relation to the process gas prepared in the interior space 24. The invention, then, can dispense with such a booster.

Although the invention has been specifically illustrated and described in detail by way of the preferred exemplary embodiment, the invention is not restricted by the examples disclosed, and a person skilled in the art can deduce other variations therefrom without departing from the scope of protection of the invention, the latter being defined only by the appended claims.

## Claims

1. A shaft-seal arrangement (11) comprising
a shaft (2), which is mounted in a rotatable manner and extends along an axial axis (1),
a stator (3), which is arranged around the shaft (2), and
a rotating sealing ring (13), which is connected to the shaft (2),
wherein a first gap (16) is formed between the stator (3) and the shaft (2),
wherein the stator (3) has a first sealing surface (20), which is arranged downstream of the first gap (16), as seen in a radial direction (17),
wherein the sealing ring (13) has a second sealing surface (21), which is arranged in a position opposite the first sealing surface (20),
wherein a second gap (22) is formed between the first sealing surface (20) and the second sealing surface (21),
wherein a mechanical seal (25) is arranged adjacent to the sealing ring (13),
wherein the mechanical seal (25) is designed in the form of a dry gas seal,
wherein the mechanical seal (25) comprises a slide ring (27),
having a gas infeed (28), which is designed such that a gas can be fed between the stator (3) and the sealing ring (13),
**characterized by**
a second sealing unit (14), which is arranged in the second gap (22), in the sealing ring (13), on the second sealing surface (21),
wherein the second sealing unit (14) is designed such that it seals the second gap (22) when the shaft (2) is not rotating and opens the second gap (22) when the shaft (2) is rotating.

2. The shaft-sealing arrangement (11) as claimed in claim 1, wherein the opening of the second gap (22) is activated by centrifugal force.

3. The shaft-sealing arrangement (11) as claimed in claim 1 or 2, wherein the second sealing unit (14) is designed in the form of a lip seal (5).

4. The shaft-sealing arrangement (11) as claimed in claim 3, wherein the lip seal (5) has lip elements (9, 10), wherein the lip elements (9, 10) form a V shape, as seen in cross section, wherein the V shape is designed to become more acutely angled under the influence of centrifugal force.

5. The shaft-sealing arrangement (11) as claimed in one of the preceding claims,
wherein the stator (3) has a recess (19), which is formed in a circumferential direction (6), wherein the first sealing surface (20) is part of the recess (19) and is arranged in a position opposite the first gap (16).

6. The shaft-sealing arrangement (11) as claimed in claim 5, wherein the sealing ring (13) has a protrusion (18), which projects into the recess (19) such that the second sealing surface (21) is arranged in a position opposite the first sealing surface (20).

7. The shaft-sealing arrangement (11) as claimed in one of the preceding claims,
wherein the first sealing surface (20) is formed essentially parallel to the axial axis (1).

8. The shaft-sealing arrangement (11) as claimed in one of the preceding claims,
wherein a first sealing unit is arranged in the first gap (16) .

9. The shaft-sealing arrangement (11) as claimed in claim 8, wherein the first sealing unit, in the first gap (16) is designed in the form of a labyrinth seal (33).

10. The shaft-sealing arrangement (11) as claimed in any of claims 1 to 9,
wherein the gas is a dry gas suitable for dry gas seals.

## Patentansprüche

1. Eine Wellendichtanordnung (11) mit
einer Welle (2), die drehbar gelagert ist und sich entlang einer axialen Achse (1) erstreckt,
einem Stator (3), der um die Welle (2) herum angeordnet ist, und
einem rotierenden Dichtring (13), der mit der Welle (2) verbunden ist,
wobei ein erster Spalt (16) zwischen dem Stator (3) und der Welle (2) gebildet wird,
wobei der Stator (3) eine erste Dichtfläche (20) aufweist, die in radialer Richtung (17) gesehen hinter dem ersten Spalt (16) angeordnet ist,
wobei der Dichtring (13) eine zweite Dichtfläche (21) aufweist, die an einer der ersten Dichtfläche (20) gegenüberliegenden Stelle angeordnet ist,
wobei zwischen der ersten Dichtfläche (20) und der zweiten Dichtfläche (21) ein zweiter Spalt (22) ausgebildet ist,
wobei neben dem Dichtring (13) eine Gleitringdichtung (25) angeordnet ist,
wobei die Gleitringdichtung (25) in Form einer Trockengasdichtung ausgebildet ist,
wobei die Gleitringdichtung (25) einen Gleitring (27) umfasst, mit einer Gaszuführung (28), die so ausgebildet ist, dass ein Gas zwischen dem Stator (3) und dem Dichtring (13) zugeführt werden kann,
**gekennzeichnet durch**
eine zweite Dichteinheit (14), die im zweiten Spalt (22), im Dichtring (13), an der zweiten Dichtfläche (21) angeordnet ist,
wobei die zweite Dichtseinheit (14) so ausgebildet ist, dass sie bei nicht rotierender Welle (2) den zweiten Spalt (22) verschließt und bei rotierender Welle (2) den zweiten Spalt (22) öffnet.

2. Die Wellendichtanordnung (11) nach Anspruch 1, wobei das Öffnen des zweiten Spalts (22) durch Fliehkraft aktiviert wird.

3. Die Wellendichtanordnung (11) nach Anspruch 1 oder 2, wobei die zweite Dichteinheit (14) als Lippendichtung (5) ausgebildet ist.

4. Die Wellendichtanordnung (11) nach Anspruch 3, wobei die Lippendichtung (5) Lippenelemente (9, 10) aufweist, wobei die Lippenelemente (9, 10) im Querschnitt gesehen eine V-Form bilden, wobei die V-Form unter dem Einfluss der Fliehkraft spitzer werdend ausgebildet ist.

5. Die Wellendichtanordnung (11) nach einem der vorhergehenden Ansprüche, wobei der Stator (3) eine Ausnehmung (19) aufweist, die in einer Umfangsrichtung (6) ausgebildet ist, wobei die erste Dichtfläche (20) Teil der Ausnehmung (19) ist und in einer dem ersten Spalt (16) gegenüberliegenden Position angeordnet ist.

6. Die Wellendichtanordnung (11) nach Anspruch 5, wobei der Dichtring (13) einen Vorsprung (18) aufweist, der in die Ausnehmung (19) hineinragt, so dass die zweite Dichtfläche (21) in einer der ersten Dichtfläche (20) gegenüberliegenden Position angeordnet ist.

7. Die Wellendichtanordnung (11) nach einem der vorhergehenden Ansprüche, wobei die erste Dichtfläche (20) im Wesentlichen parallel zur Axialachse (1) ausgebildet ist.

8. Die Wellendichtanordnung (11) nach einem der vorhergehenden Ansprüche, wobei in dem ersten Spalt (16) eine erste Dichteinheit angeordnet ist.

9. Die Wellendichtanordnung (11) nach Anspruch 8, wobei die erste Dichteinheit in dem ersten Spalt (16) als Labyrinthdichtung (33) ausgebildet ist.

10. Die Wellendichtanordnung (11) nach einem der Ansprüche 1 bis 9, wobei das Gas ein für Trockengasdichtungen geeignetes Trockengas ist.

## Revendications

1. Dispositif (11) d'étanchéité d'arbre comprenant
un arbre (2), qui est monté de manière à pouvoir tourner et qui s'étend le long d'un axe (1) axial,
un stator (3), qui est disposé autour de l'arbre (2), et un anneau (13) d'étanchéité tournant, qui est relié à l'arbre (2),
dans lequel un premier intervalle (16) est formé entre le stator (3) et l'arbre (2),
dans lequel le stator (3) a une première surface (20) d'étanchéité, qui
est disposée en aval du premier intervalle (16), tel que vu dans une direction (17) radiale,
dans lequel l'anneau (13) d'étanchéité a une deuxième surface (21) d'étanchéité, qui est disposée dans une position opposée à la première surface (20) d'étanchéité,
dans lequel un deuxième intervalle (22) est formé entre la première surface (20) d'étanchéité et la deuxième surface (21) d'étanchéité,
dans lequel un joint (25) mécanique est disposé au voisinage de l'anneau (13) d'étanchéité,
dans lequel le joint (25) mécanique est conçu sous la forme d'un gaz sec,
dans lequel le joint (25) mécanique comprend un anneau (27) glissant ayant une entrée (28) pour du gaz, qui est conçue de manière à ce que du gaz peut être envoyé entre le stator (3) et l'anneau (13) d'étanchéité,
**caractérisé par**
une deuxième unité (14) d'étanchéité, qui est disposée dans le deuxième intervalle (22) dans l'anneau (13) d'étanchéité, sur la deuxième surface (21) d'étanchéité,
dans lequel la deuxième unité (14) d'étanchéité est conçue de manière à ce qu'elle rende étanche le deuxième intervalle (22), lorsque l'arbre (2) ne tourne pas et ouvre le deuxième intervalle (22), lorsque l'arbre (2) tourne.

2. Dispositif (11) d'étanchéité d'arbre suivant la revendication 1, dans lequel l'ouverture du deuxième intervalle (22) est activée par une force centrifuge.

3. Dispositif (11) d'étanchéité d'arbre suivant la revendication 1 ou 2, dans lequel la deuxième unité (14) d'étanchéité est conçue sous la forme d'un joint (5) à lèvres.

4. Dispositif (11) d'étanchéité d'arbre suivant la revendication 3, dans lequel le joint (5) à lèvres a des éléments (9, 10) de lèvres, dans lequel les éléments (9, 10) de lèvres forment une forme en V, tel que vus en section transversale, dans lequel la forme en V est conçue pour devenir angulairement plus aigue sous l'influence d'une force centrifuge.

5. Dispositif (11) d'étanchéité d'arbre suivant l'une des revendications précédentes,
dans lequel le stator (3) a un chambrage (19), qui est formé dans une direction (6) circonférentielle, dans lequel la première surface (20) d'étanchéité fait partie du chambrage (19) et est disposée dans une position opposée au premier intervalle (16).

6. Dispositif (11) d'étanchéité d'arbre suivant la revendication 5, dans lequel l'anneau (13) d'étanchéité a une saillie (18), qui fait saillie dans le chambrage (19), de manière à ce que la deuxième surface (21) d'étanchéité soit disposée dans une position opposée à la première surface (20) d'étanchéité.

7. Dispositif (11) d'étanchéité d'arbre suivant l'une des revendications précédentes,
dans lequel la première surface (20) d'étanchéité est formée en étant sensiblement parallèle à l'axe (1) axial.

8. Dispositif (11) d'étanchéité d'arbre suivant l'une des revendications précédentes,
dans lequel une première unité d'étanchéité est disposée dans le premier intervalle (16).

9. Dispositif (11) d'étanchéité d'arbre suivant la revendication 8, dans lequel
la première unité d'étanchéité, dans le premier intervalle (16), est conçue sous la forme d'un joint (33) labyrinthe.

10. Dispositif (11) d'étanchéité d'arbre suivant l'une des revendications 1 à 9,
dans lequel le gaz est un gaz sec approprié à des joints à gaz sec.
